Europäisches Patentamt

European Patent Office

Office européen des brevets

(19)

(11) Veröffentlichungsnummer: **0 015 533**
**B1**

(12) # EUROPÄISCHE PATENTSCHRIFT

(45) Veröffentlichungstag der Patentschrift:
**12.01.83**

(21) Anmeldenummer: **80101068.7**

(22) Anmeldetag: **03.03.80**

(51) Int. Cl.³: **G 02 B 5/16**, G 02 B 7/26,
C 03 B 37/025, C 03 B 37/02,
C 03 B 37/16

(54) **Spaltbare Lichtleitfaser und Verfahren zu deren Herstellung.**

(30) Priorität: **09.03.79 DE 2909356**

(43) Veröffentlichungstag der Anmeldung:
**17.09.80 Patentblatt 80/19**

(45) Bekanntmachung des Hinweises auf die Patenterteilung:
**12.01.83 Patentblatt 83/2**

(84) Benannte Vertragsstaaten:
**FR GB**

(56) Entgegenhaltungen:
**DE-A-2 510 114**
**DE-A-2 738 050**
**DE-A-2 923 093**
**FR-A-2 360 898**
**FR-A-2 417 789**
**GB-A-2 012 983**
**US-A-3 063 094**

(73) Patentinhaber: **SIEMENS AKTIENGESELLSCHAFT**
**Berlin und München, Postfach 22 02 61,**
**D-8000 München 22 (DE)**

(72) Erfinder: **Schneider, Hartmut, Dr., Blütenstrasse 12,**
**D-8000 München 40 (DE)**

Spaltbare Lichtleitfaser und Verfahren zu deren Herstellung

Die Erfindung betrifft eine spaltbare Lichtleitfaser, insbesondere für optische Richtkoppler, mit einem Lichtleitfasermantel, in dem mindestens ein Lichtleitfaserkern eingebettet ist.

Eine derartige Lichtleitfaser ist bereits aus der DE-A-25 10 114 bekannt. Sie weist thermische Spannungen auf, die durch axial unsymmetrische Überhitzung in der Formungs- und Erweichungszone beim Ziehen aus einem massiven Ausgangskörper erzeugt werden. Durch diese Spannungen tritt eine Spalttendenz in der Lichtleitfaser entlang ihrer Achse auf. Beim Zerbrechen der so hergestellten Faser ergeben sich Faserstücke mit einem durch den Fasermittelpunkt gehenden Längsspalt von unterschiedlicher Länge.

Der vorliegenden Erfindung liegt die Aufgabe zugrunde, eine spaltbare Lichtleitfaser der eingangs genannten Art anzugeben, bei der die Lage einer Spaltebene vorherbestimmbar ist. Ausserdem sollen Multikanal-Lichtleitfasern mit mehreren Faserkernen in einem gemeinsamen Fasermantel in mehreren Ebenen spaltbar sein.

Diese Aufgabe wird erfindungsgemäss dadurch gelöst, dass die Faser mindestens zwei Längskerben aufweist. Werden in diese Kerben Keile oder dgl. gepresst, so lässt sich die Faser ein Stück spalten. Die Spaltebene ist durch die Kerben festgelegt. Auch die Länge der aufgespaltenen Faser lässt sich leicht steigern, indem die Keile nacheinander an unterschiedlichen Stellen entlang der Faser angesetzt werden. Soll beispielsweise eine Einkanal-Faser geradling durch den Fasermittelpunkt gespalten werden, so muss die Faser zwei Kerben aufweisen, die sich diametral gegenüberliegen.

Handelt es sich um eine Multikanal-Lichtleitfaser, deren Faserende in Teilfasern mit je einem Faserkern zerlegt werden soll, so ist in Weiterbildung der Erfindung vorgesehen, dass jede Längskerbe in einer Ebene liegt, die senkrecht auf der durch jeweils zwei benachbarte Faserkerne aufgespannten Ebene steht und diese in der Mitte zwischen diesen Faserkernen schneidet. Handelt es sich z.B. um eine Lichtleitfaser mit zwei Faserkernen, so sind die Kerben so orientiert, dass die durch sie bestimmte Ebene senkrecht auf der durch die Kerne bestimmten Ebene steht.

Wird die Lichtleitfaser aus einer stabförmigen Vorform gezogen, die durch Kollabieren eines auf der Innenwand beschichteten Quarzglasrohres erzeugt wird, so lassen sich die Kerben vorteilhaft erzielen, indem die Vorform durch Sägen, Ätzverfahren oder dgl. mit Längsschlitzen versehen wird. Beim Faserziehen verrunden diese Schlitze teilweise. Es bleiben jedoch ausreichend tiefe Kerben, um definierte Ansatzpunkte für die Keile zu bilden. Bei einer starken Verrundung kann die Faseroberfläche in den Kerben vor der Spaltung zusätzlich geritzt werden.

Wird hingegen die Lichtleitfaser aus einem Doppeltiegel gezogen, so lassen sich die Kerben vorteilhaft einfach durch Wahl der Düsenform des äusseren Tiegels beim Ziehen formen. Eine weitere Möglichkeit, die Faser mit Kerben zu versehen, besteht darin, dass nach dem Ziehen die Kerben eingeätzt werden.

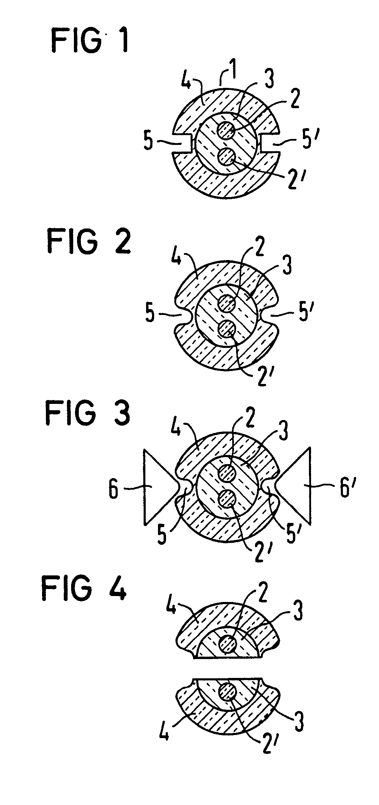

Im folgenden wird anhand von vier Figuren ein Ausführungsbeispiel einer spaltbaren Faser und ihre Herstellung beschrieben und erläutert. Dabei zeigen die Fig. 1 bis 4 in schematischer Darstellung den Querschnitt durch verschiedene Herstellungsphasen einer gespaltenen Faser. Gleiche Teile sind dabei mit gleichen Bezugszeichen versehen.

Fig. 1 zeigt eine Vorform 1 für eine Lichtleitfaser mit zwei Faserkernen 2 und 2', die von einem gemeinsamen Fasermantel 3 umschlossen sind. Der Fasermantel 3 wiederum ist von einem kollabierten Quarzglasrohr 4 umgeben. Da die aus dieser Vorform 1 gezogene Faser an ihrem Ende in zwei Teilfasern mit je einem vollständig von Mantelglas umschlossenen Faserkern aufgespalten werden soll, muss die Spaltebene senkrecht zur durch die Kerne aufgespannten Ebene liegen und eine Verbindungslinie zwischen den Kernmittelpunkten halbieren.

Um das zu erreichen, sind in die Vorform 1 zwei sich diametral gegenüberliegende Schlitze 5 bzw. 5' eingesägt worden. Diese Vorform wird nun in der üblichen Weise zur Faser ausgezogen. Fig. 2 zeigt — der Deutlichkeit halber in geändertem Massstab — die fertige spaltbare Faser mit den zwei Faserkernen 2 bzw. 2', dem Fasermantel 3 und der Quarzglashülle 4. Wie dieser Figur zu entnehmen ist, sind die scharfkantigen Schlitze gemäss der Fig. 1 beim Ziehen verrundet. Es sind jedoch immer noch deutliche Kerben 5 bzw. 5' vorhanden.

In der Fig. 3 ist dieselbe spaltbare Faser dargestellt wie in der Fig. 2. Zusätzlich sind zwei Keile 6 bzw. 6' angedeutet, die in die Kerben 5 bzw. 5' gedrückt werden sollen. Vorteilhafterweise wird man die beiden Keile mit einem definierten Vorschub gleichmässig von beiden Seiten in die Kerben einführen und den Druck auf die Faser von beiden Seiten allmählich steigern, bis sich die Faser spaltet.

In der Fig. 4 ist schliesslich die gespaltene Faser mit ihren zwei identischen Hälften dargestellt. Jede Hälfte enthält einen Kern 2 bzw. 2', der vollständig von einem Fasermantel 3 umgeben ist.

Für das Ausführungsbeispiel wurde eine Multikanal-Lichtleitfaser mit zwei Kernen ausgewählt. Mit einer Lichtleitfaser mit mehreren Kernen, die beispielsweise auf einem Kreis angeordnet sind, lässt sich die Faser in Teilfasern mit je einem Kern aufspalten, indem die Spaltebenen strahlenförmig vom Mittelpunkt der Faser zwischen den Kernen nach aussen geführt sind. Entsprechend müssen die Längskerben angeordnet sein.

## Patentansprüche

1. Spaltbare Lichtleitfaser, insbesondere für optische Richtkoppler, mit einem Lichtleitfasermantel, in dem mindestens ein Lichtleitfaserkern eingebettet ist, dadurch gekennzeichnet, dass die Faser mindestens zwei Längskerben (5, 5') aufweist.

2. Spaltbare Lichtleitfaser nach Anspruch 1, mit mehreren Lichtleitfaserkernen, dadurch gekennzeichnet, dass jede Längskerbe (5, 5') in einer Ebene liegt, die senkrecht auf der durch jeweils zwei benachbarte Faserkerne (2, 2') aufgespannten Ebene steht und diese in der Mitte zwischen diesen Faserkernen (2, 2') schneidet.

3. Verfahren zur Herstellung einer spaltbaren Lichtleitfaser nach Anspruch 1 oder 2, bei dem zunächst eine stabförmige Vorform erzeugt wird, die dann zur Faser ausgezogen wird, dadurch gekennzeichnet, dass die Vorform (1), z.B. durch Sägen oder Ätzen mit Längskerben (5, 5') versehen wird.

4. Verfahren zur Herstellung einer spaltbaren Lichtleitfaser nach Anspruch 1 oder 2 nach der Doppeltiegel-Methode, dadurch gekennzeichnet, dass die Düsenform des äusseren Tiegels so gewählt wird, dass die Längskerben (5, 5') beim Ziehen der Faser geformt werden.

## Claims

1. A cleavable light-conducting fibre, in particular for optical directional couplers, comprising a light-conducting fibre cladding, in which at least one light-conducting fibre core is embedded, characterised in that the fibre has at least two longitudinal grooves (5, 5').

2. A cleavable light-conducting fibre as claimed in Claim 1, having a plurality of light-conducting fibre cores, characterised in that each longitudinal groove (5, 5') lies in a plane which is at right angles to the plane extending through two respective adjacent fibre cores (2, 2') and which intersects this plane centrally between these fibre cores (2, 2').

3. A process for the production of a cleavable light-conducting fibre as claimed in Claim 1 or Claim 2, in which a rod-shaped preform is first produced and is then stretched to form the fibre, characterised in that the preform (1) is provided with longitudinal grooves (5, 5'), for example, by sawing or etching.

4. A process for the production of a cleavable light-conducting fibre as claimed in Claim 1 or Claim 2 using the double crucible method, characterised in that the shape of the nozzle of the outer crucible is selected to be such that the longitudinal grooves (5, 5') are formed when drawing the fibre.

## Revendications

1. Fibre optique susceptible d'être fendue, plus particulièrement pour des coupleurs optiques directifs, comportant une gaine de fibre optique dans laquelle est noyé au moins un coeur de fibre optique, caractérisée par le fait que la fibre comporte au moins deux gorges longitudinales (5, 5').

2. Fibre optique susceptible d'être fendue selon la revendication 1, à plusieurs coeurs de fibre optique, caractérisée par le fait que chaque gorge longitudinale (5, 5') se situe dans un plan qui est perpendiculaire à un plan passant par deux coeurs voisins (2, 2') et coupe ce dernier au milieu entre ces coeurs de fibre (2, 2').

3. Procédé pour la fabrication d'une fibre optique susceptible d'être fendue selon la revendication 1 ou 2, dans lequel on produit d'abord une préforme ayant l'allure d'une tige qui est ensuite étirée pour constituer la fibre, caractérisé par le fait que la préforme (1) est pourvue de gorges longitudinales (5, 5') par exemple par sciage ou par attaque chimique.

4. Procédé pour la fabrication d'une fibre optique susceptible d'être fendue selon la revendication 1 ou 2, selon la méthode du double creuset, caractérisée par le fait que la forme de la tuyère du creuset extérieur est choisie de façon que les gorges longitudinales (5, 5') soient formées pendant l'étirage de la fibre.

0 015 533

FIG 1

FIG 2

FIG 3

FIG 4

5